# FASCICULE DE BREVET EUROPEEN

(11) **EP 3 075 652 B1**
(45) Date de publication et mention de la délivrance du brevet: **21.11.2018**
(21) Numéro de dépôt: 16161722.0
(22) Date de dépôt: 22.03.2016
(51) Int. Cl.: B64C 1/30, B64C 1/06, B64C 27/06

(54) **DISPOSITIF DE REPLIAGE/DEPLIAGE D'UNE POUTRE DE QUEUE D'UN GIRAVION, GIRAVION ASSOCIE ET PROCEDE DE REPLIAGE/DEPLIAGE CORRESPONDANT**
VORRICHTUNG ZUM EINKLAPPEN/AUSKLAPPEN EINES HECKAUSLEGERS EINES DREHFLÜGELFLUGZEUGS, ENTSPRECHENDES DREHFLÜGELFLUGZEUG UND ENTSPRECHENDES EIN- UND AUSKLAPPVERFAHREN
A DEVICE FOR FOLDING/UNFOLDING A TAIL BOOM OF A ROTORCRAFT, AN ASSOCIATED ROTORCRAFT, AND A CORRESPONDING FOLDING/UNFOLDING METHOD

(30) Priorité: 31.03.2015 FR 1500642
(43) Date de publication de la demande: 05.10.2016
(73) Titulaire: Airbus Helicopters, 13725 Marignane Cedex (FR)
(72) Inventeur: Maltinti, Maxime, 13150 Tarascon (FR); Poggioli, Florian, 13116 Vernegues (FR)
(74) Mandataire: GPI & Associés

(56) Documents cités:
- EP-A2- 0 894 711
- DE-A1- 19 647 166
- KR-B1- 100 692 237
- US-A- 4 245 801
- US-A- 5 360 376

## Description

La présente invention se rapporte au domaine des giravions équipés en général d'un ou plusieurs groupes moteurs, d'une boite de transmission principale de puissance, d'au moins un arbre de transmission principal de puissance entrainant en rotation un rotor principal apte à réaliser au moins la sustentation du giravion, d'au moins un arbre de transmission arrière de puissance et d'au moins une boite de transmission arrière de puissance qui entraîne en rotation un rotor arrière du giravion permettant de commander les mouvements du giravion, notamment d'un hélicoptère, autour d'un axe de lacet.

Dans certains cas particuliers, un tel giravion peut également comporter une boite de transmission intermédiaire de puissance agencée au niveau d'une poutre de queue sur une ligne de transmission de puissance, en amont de la boite de transmission arrière de puissance et en aval de la boite de transmission principale de puissance. Une telle boite de transmission de puissance intermédiaire forme ainsi un renvoi d'angle dit "renvoi d'angle de transmission de puissance" et est utilisée lorsque l'axe de rotation du rotor arrière est décalé verticalement par rapport à une direction longitudinale de la poutre de queue du giravion, par exemple au dessus d'un plan dans lequel est inscrit l'arbre de transmission arrière de puissance.

L'invention concerne plus particulièrement un dispositif de repliage/dépliage réversible destiné à équiper l'arbre arrière de transmission de puissance.

En outre, un tel dispositif de repliage/dépliage est intrinsèquement agencé au niveau d'une jonction entre deux portions d'une poutre de queue de giravion. Ainsi, une première portion de la poutre de queue est solidaire du fuselage du giravion et fixe par rapport à celui-ci. Une deuxième portion de la poutre de queue est quant à elle mobile en rotation autour d'un axe par rapport à la portion fixe.

Un tel dispositif de repliage/dépliage permet ainsi de réduire l'encombrement en longueur du giravion lorsque la portion mobile de la poutre de queue est agencée dans une position repliée. Ce dispositif de repliage/dépliage permet en effet de rendre une poutre de queue repliable quand les rotors du giravion sont à l'arrêt et améliore ainsi la compacité des giravions lors de leur transport ou de leur stockage dans des compartiments étroits et exigus tels que notamment des soutes de bateaux ou d'avions cargo et des hangars.

Généralement et tel que décrit notamment dans le document KR 100 692 237, le repliage/dépliage de la poutre de queue d'un giravion est réalisé autour d'un axe de rotation inscrit sensiblement dans un plan transversal perpendiculaire à une direction longitudinale de l'arbre de transmission de puissance apte à transmettre un couple moteur au rotor arrière du giravion.

Cependant, lorsque l'axe de rotation est inscrit dans un tel plan transversal perpendiculaire à l'arbre arrière de transmission de puissance, la présence d'un stabilisateur horizontal, telle une dérive arrière agencée à proximité du rotor arrière, peut générer des interférences mécaniques en venant buter contre la portion fixe de la poutre de queue.

En effet, un tel stabilisateur horizontal émerge sensiblement radialement d'une direction longitudinale de la poutre de queue et consiste en un empennage transversal horizontal ou sensiblement horizontal, voire incliné. De plus, un tel stabilisateur horizontal peut être agencé de façon asymétrique ou symétrique de part et d'autre de la poutre de queue.

Ainsi, lors du repliage de la poutre de queue, la portion mobile ne peut se rabattre contre la portion fixe avec un angle d'ouverture de 180 degrés. A cause du stabilisateur horizontal, et des interférences mécaniques entre les deux portions de la poutre de queue qui en résultent, l'angle de repliage/dépliage autour de l'axe de rotation est au maximum de 120 degrés. Cette limitation de l'angle de repliage/dépliage confère alors au giravion une largeur importante qui peut même se révéler supérieure à la largeur de la cabine de pilotage.

Ainsi, avec ce type de dispositif de repliage/dépliage, l'encombrement en longueur peut être réduit mais l'encombrement en largeur peut quant à lui dans certains cas être augmenté.

Afin de pallier à ces problèmes, il a ensuite été conçu, tels que décrits dans les documents EP 0 894 711, DE 196 47 166, US 4 245 801 et US 5 360 376, des dispositifs d'accouplement dans lesquels l'axe de rotation de la liaison pivot entre la portion mobile et la portion fixe est incliné par rapport au plan transversal tel que défini précédemment. En effet, en inclinant l'axe de rotation d'un angle d'environ 16 à 17 degrés, il est alors possible de faire passer le stabilisateur horizontal agencé sur la portion mobile en dessous de la portion fixe de la poutre de queue. Un tel agencement permet ainsi d'augmenter l'angle de repliage/dépliage de la poutre de queue et par conséquent de réduire l'encombrement en largeur du giravion.

Cependant, pour permettre le mouvement de rotation entre la portion fixe et la portion mobile de la poutre de queue, l'arbre arrière de transmission de puissance doit être désaccouplé mécaniquement ou décraboté pour être séparé en deux parties. Une telle action de décrabotage est généralement obtenue au moyen d'un crabot mobile en translation suivant la direction longitudinale de l'arbre arrière de transmission de puissance.

En effet, la cinématique en rotation inclinée des deux portions de la poutre de queue par rapport au plan perpendiculaire à la direction longitudinale de l'arbre arrière de transmission de puissance engendre alors une interférence entre les deux parties de l'arbre arrière de transmission de puissance.

Le brevet EP 0 894 711 décrit un tel dispositif de repliage/dépliage comprenant notamment un crabot mobile en translation le long d'une direction longitudinale parallèle à l'arbre arrière de transmission de puissance.

Par ailleurs dans ce cas, la poutre de queue en se repositionnant lors de la fermeture de la portion mobile de la poutre de queue permet de s'assurer du bon alignement de l'ensemble des arbres arrière de transmission de puissance. La fonction accouplement/désaccouplement est décorrélée du verrouillage nécessaire de la poutre de queue en position dépliée d'accouplement, c'est-à-dire en configuration de vol du giravion.

De plus, comme les deux parties de l'arbre arrière de transmission de puissance de la poutre de queue pivotent l'une par rapport à l'autre autour d'un axe de rotation incliné par rapport au plan transversal perpendiculaire, l'accouplement mécanique est assuré par un élément de guidage conique et des dentures présentant un profil en arc de cercle. Ce guidage conique comporte de plus des moyens de support axial élastiques destinés à supporter axialement la mise en coïncidence des dentures lorsque la portion mobile de la poutre de queue est engagée en regard de la portion fixe.

Au niveau de l'arbre arrière de transmission de puissance, le cône de la partie fixe possède une course de recul importante et permet de réaliser un autocentrage avec le cône de réception de la partie mobile. Le cône de la partie fixe vient ensuite en contact avec la butée interne du cône de réception de la partie mobile. Lorsque l'on réalise le dépliage total de la poutre de queue, le cône de réception recule sous l'impulsion du cône de la partie fixe jusqu'à son point d'enclenchement permettant de réaliser l'accouplement de la transmission de puissance.

Ainsi, un tel dispositif de repliage/dépliage nécessite de disposer d'un certain recul au niveau de l'arbre arrière de transmission de puissance et interdit son installation à proximité immédiate d'une boite de transmission de puissance arrière ou, dans certains cas particulier où le giravion en est équipé, à proximité immédiate d'une boite de transmission de puissance intermédiaire. En outre, ce type de dispositif limite également l'angle de repliage/dépliage de la portion mobile par rapport à la portion fixe de la poutre de queue.

Par ailleurs, cette technique de repliage/dépliage de la poutre de queue nécessite un dispositif de repliage/dépliage avec des organes coniques complexes mécaniquement à réaliser, lourds et nécessitant des opérations de maintenance supplémentaires pour s'assurer du bon fonctionnement et du niveau d'usure des différentes pièces en mouvement constituant de tels dispositifs.

La présente invention a alors pour objet de proposer un dispositif permettant de s'affranchir des limitations mentionnées ci-dessus.

Un tel dispositif a ainsi pour objectif d'améliorer la compacité en longueur et en largeur d'un giravion disposant d'une poutre de queue pliable en vue de son transport et/ou de son stockage. Un autre but de l'invention est de permettre l'installation du dispositif de repliage/dépliage sur la poutre de queue, et ce, à n'importe quel endroit d'un arbre arrière de transmission de puissance.

Par ailleurs, il convient de rappeler qu'une ligne arrière de transmission de puissance peut comporter plusieurs arbres arrière de transmission de puissance et notamment par exemple :
- un premier arbre arrière de transmission de puissance agencé entre la boite de transmission principale de puissance et une boite de transmission intermédiaire de puissance, et
- un second arbre arrière de transmission de puissance agencé entre la boite de transmission intermédiaire de puissance et une boite de transmission arrière de puissance.

Ainsi, un dispositif de repliage/dépliage selon l'invention est plus généralement positionné sur la poutre de queue au niveau d'un arbre arrière de transmission de puissance en amont d'une boite de transmission de puissance arrière et en aval d'une boite de transmission de puissance principale afin de garantir un angle de repliage/dépliage maximal pour la portion mobile de la poutre de queue.

L'invention concerne donc un dispositif de repliage/dépliage d'une poutre de queue agencé sur cette poutre de queue au niveau d'un arbre arrière de transmission de puissance en amont d'une boite de transmission de puissance arrière et en aval d'une boite de transmission de puissance principale reliées mécaniquement à au moins un moteur du giravion.

L'arbre arrière de transmission de puissance est quant à lui apte à transmettre un couple moteur et à entrainer en rotation un rotor arrière du giravion.

Un tel dispositif de repliage/dépliage comporte :
- des moyens de désaccouplement/d'accouplement mécanique entre deux parties du même arbre arrière de transmission de puissance agencées respectivement en amont et en aval du dispositif de repliage/dépliage, et
- des moyens rotatifs permettant de réaliser un déplacement relatif en rotation entre une portion mobile de la poutre de queue et une portion fixe de la poutre de queue, le déplacement relatif en rotation s'effectuant entre deux positions extrémales distinctes, à savoir une position dépliée de travail permettant à l'arbre arrière de transmission de puissance de transmettre un couple moteur au rotor arrière et une position repliée de repos permettant de réduire l'encombrement en longueur du giravion lorsque le moteur, l'arbre arrière de transmission de puissance et le rotor arrière sont à l'arrêt.

Ce dispositif de repliage/dépliage est remarquable en ce que les moyens de désaccouplement/d'accouplement sont motorisés et peuvent être actionnés indépendamment des moyens rotatifs pour, d'une part, désaccoupler mécaniquement les deux parties du même arbre arrière de transmission de puissance préalablement au déplacement relatif en rotation correspondant au repliage de la portion mobile par rapport à la portion fixe de la poutre de queue et, d'autre part, accoupler mécaniquement les deux parties du même arbre arrière de transmission de puissance postérieurement au déplacement relatif en rotation correspondant au dépliage de la portion mobile par rapport à la portion fixe de la poutre de queue.

Autrement dit, un tel dispositif de repliage/dépliage permet de réaliser le désaccouplement entre deux parties de l'arbre arrière de transmission de puissance de la poutre de queue avant de commencer tout mouvement de rotation relatif entre la portion mobile et la portion fixe. Par ailleurs, les moyens de désaccouplement/d'accouplement peuvent comporter au moins un actionneur qui peut être notamment choisi parmi le groupe comprenant les actionneurs pneumatiques, hydrauliques ou électriques.

De plus, les moyens de désaccouplement/d'accouplement permettent de déplacer en translation un organe d'accouplement tel un crabot selon une direction sensiblement parallèle à une direction longitudinale de l'arbre arrière de transmission de puissance. Un tel crabot comporte généralement des dents émergeant radialement vers l'extérieur, les dents de ce crabot étant destinées à coopérer avec des rainures complémentaires ménagées dans une cloche fixe solidaire d'une autre partie de l'arbre arrière de transmission de puissance.

Par ailleurs, comme déjà évoqué dans certains cas particuliers, un giravion peut comporter une boite de transmission intermédiaire de puissance agencée au niveau d'une poutre de queue sur une ligne de transmission de puissance, en amont de la boite de transmission arrière de puissance et en aval de la boite de transmission principale de puissance.

Selon ces cas particuliers, le dispositif de repliage/dépliage d'une poutre de queue conforme à l'invention est alors plus précisément agencé sur cette poutre de queue au niveau d'un arbre arrière de transmission de puissance en amont d'une boite de transmission de puissance intermédiaire et en aval d'une boite de transmission de puissance principale reliées mécaniquement à au moins un moteur du giravion.

Avantageusement, le dispositif de repliage/dépliage peut comporter des moyens de déverrouillage/verrouillage en position dépliée de travail de la portion mobile de la poutre de queue par rapport à la portion fixe de la poutre de queue.

En d'autres termes, les moyens de déverrouillage/verrouillage permettent d'éviter tout repliage accidentel la poutre de queue. De tels moyens verrouillage/déverrouillage réalisent ainsi un blocage en position dépliée de la liaison en rotation entre la portion mobile et la portion fixe de la poutre de queue, ce blocage étant nécessaire en configuration de vol du giravion.

Par ailleurs, les moyens verrouillage/déverrouillage sont avantageusement motorisés et peuvent être commandés de façon automatique par le pilote ou toute autre personne habilitée à commander le repliage/dépliage de la poutre de queue du giravion telle un mécanicien par exemple.

Selon un premier et un deuxième modes de réalisation, les moyens de désaccouplement/d'accouplement et les moyens de déverrouillage/verrouillage peuvent être actionnés par un actionneur commun.

Ainsi, un unique actionneur, et par conséquent une même consigne de commande de cet actionneur, peuvent permettre à la fois de désaccoupler/accoupler mécaniquement l'arbre arrière de transmission de puissance et de déverrouiller le mouvement de rotation relative entre la portion mobile et la portion fixe de la poutre de queue.

Dans ce cas, les moyens de désaccouplement/d'accouplement peuvent comporter un premier moyen de rappel élastique sollicité en compression et dont les extrémités libres prennent respectivement appui sur un châssis de la portion fixe et sur une face plane d'un crabot mobile en translation selon une direction parallèle à une direction longitudinale de l'arbre arrière de transmission de puissance et les moyens de déverrouillage/verrouillage peuvent comporter un second moyen de rappel élastique sollicité en compression et dont les extrémités libres prennent respectivement appui sur le châssis de la portion fixe et sur une face plane d'une tige des moyens de déverrouillage/verrouillage.

De cette manière, même en cas de dysfonctionnement de l'actionneur commun, les moyens de désaccouplement/d'accouplement et les moyens de déverrouillage/verrouillage peuvent chacun revenir automatiquement dans une position de repos sûre destinée à éviter tout risque d'accident pour le giravion.

Ainsi, le premier moyen de rappel élastique permet d'immobiliser les moyens de désaccouplement/d'accouplement dans une position d'accouplement garantissant une transmission de puissance mécanique entre les deux parties de l'arbre arrière de transmission de puissance. Le second moyen de rappel élastique permet quant à lui d'immobiliser les moyens de déverrouillage/verrouillage dans une position de verrouillage de la rotation relative entre la portion mobile et la portion fixe de la poutre de queue.

En pratique, le premier moyen de rappel élastique peut permettre d'exercer une première force de rappel sur le crabot et le second moyen de rappel élastique peut permettre d'exercer une seconde force de rappel sur la tige des moyens de déverrouillage/verrouillage, la première force de rappel étant inférieure à la seconde force de rappel.

De cette façon, la seconde force de rappel exercée par le second moyen de rappel élastique permet de garantir que la tige des moyens de déverrouillage/verrouillage reste dans une position de repos dite "normalement sortie" en cas de panne de puissance de l'actionneur.

Toujours selon les premier et deuxième modes de réalisation, le dispositif peut avantageusement comporter un organe de liaison mécanique permettant un actionnement simultané des moyens de désaccouplement/d'accouplement et des moyens de déverrouillage/verrouillage avec l'actionneur commun.

Autrement dit, un tel organe de liaison mécanique permet de transmettre le mouvement de l'actionneur commun simultanément aux moyens de désaccouplement/d'accouplement et aux moyens de déverrouillage/verrouillage.

Ainsi selon le premier mode de réalisation, l'organe de liaison mécanique peut comporter au moins une bielle, au moins un renvoi d'angle dit "renvoi d'angle de liaison" comportant au moins un degré de liberté en rotation par rapport au châssis et un poussoir permettant d'exercer un effort de poussée sur la face plane du crabot, les extrémités libres de la bielle étant respectivement agencées en liaison rotule avec d'une part une extrémité libre de la tige et d'autre part une extrémité libre d'un bras de levier du renvoi d'angle de liaison, l'organe de liaison mécanique permettant à l'actionneur commun de déplacer en translation le crabot mobile selon une direction parallèle à la direction longitudinale de l'arbre arrière de transmission de puissance.

En d'autres termes, l'actionneur commun peut réaliser directement un déplacement en translation d'une tige des moyens de déverrouillage/verrouillage selon une première direction de translation.

Dans un premier temps, la bielle et le renvoi d'angle de liaison permettent de transformer le mouvement de translation de l'actionneur en un mouvement de rotation du renvoi d'angle de liaison par rapport au châssis de la portion fixe de la poutre de queue.

Puis, dans un deuxième temps, le poussoir du renvoi d'angle de liaison permet de transformer la rotation du renvoi d'angle de liaison en un mouvement de translation du crabot selon une seconde direction correspondant à la direction parallèle à la direction longitudinale de l'arbre arrière de transmission de puissance.

Par ailleurs, selon le deuxième mode de réalisation, l'organe de liaison mécanique peut comporter au moins une excroissance apte à commander le déplacement en translation d'un crabot, une telle excroissance étant agencée en liaison glissière avec un châssis de la portion fixe de la poutre de queue et comportant une extrémité libre agencée en liaison linéaire annulaire avec une extrémité libre d'une tige, une telle tige étant agencée en liaison hélicoïdale avec le châssis pour transformer le déplacement en translation d'au moins un doigt de l'actionneur en un mouvement combiné de rotation et de translation de la tige par rapport au châssis.

Ainsi dans ce cas, comme dans le premier mode de réalisation, l'actionneur commun peut réaliser directement un déplacement en translation d'une tige des moyens de déverrouillage/verrouillage selon une première direction de translation.

Tout d'abord, la liaison hélicoïdale permet de transformer le mouvement de translation de l'actionneur en un mouvement de rotation et de translation de la tige par rapport au châssis de la portion fixe de la poutre de queue.

Ensuite, la liaison linéaire annulaire avec l'excroissance et la liaison glissière entre l'excroissance et le châssis permettent de transformer le mouvement de rotation de la tige en un mouvement de translation du crabot selon une seconde direction correspondant à la direction parallèle à la direction longitudinale de l'arbre arrière de transmission de puissance.

Selon un troisième mode de réalisation, les moyens de désaccouplement/d'accouplement peuvent comporter un premier actionneur et les moyens de déverrouillage/verrouillage peuvent comporter un second actionneur distinct du premier actionneur.

Dans ce cas, les moyens de désaccouplement/d'accouplement et les moyens de déverrouillage/verrouillage peuvent être actionnés de façon indépendante simultanément ou bien l'un après l'autre, les moyens de désaccouplement/d'accouplement étant alors actionnés avant les moyens de déverrouillage/verrouillage. De cette façon, on évite tout risque de repliage de la poutre de queue avec un arbre arrière de transmission de puissance encore accouplé entre sa partie fixe et sa partie mobile.

En pratique, quel que soit le mode de réalisation retenu, les moyens rotatifs peuvent comporter un axe de rotation incliné d'un angle prédéterminé α par rapport à un plan P perpendiculaire à une direction longitudinale de l'arbre arrière de transmission de puissance, un tel angle prédéterminé α étant compris entre 20 degrés et 30 degrés.

Ainsi, un tel angle α d'inclinaison de l'axe de rotation entre la portion mobile de la poutre de queue et la portion fixe permet notamment à un stabilisateur horizontal agencé sur la portion mobile de passer en dessous de la portion fixe tout en garantissant la non collision entre les pales du rotor arrière et le sol.

Un tel angle d'inclinaison prédéterminé α peut notamment être choisi égal à 26 degrés et permet alors de réaliser un repliage de la poutre de queue avec un angle d'ouverture d'environ 170 degrés.

La présente invention a aussi pour objet un giravion équipé d'un rotor arrière agencé au niveau d'une poutre de queue, le rotor arrière étant entrainé en rotation au moyen d'au moins un moteur et d'un arbre arrière de transmission de puissance et la poutre de queue comportant une portion mobile en rotation par rapport à une portion fixe entre deux positions extrémales distinctes, à savoir une position dépliée de travail permettant à l'arbre arrière de transmission de puissance de transmettre un couple moteur au rotor arrière et une position repliée de repos permettant de réduire l'encombrement en longueur du giravion lorsque le moteur, l'arbre arrière de transmission de puissance et le rotor arrière sont à l'arrêt.

Conformément à l'invention, le giravion se caractérise en ce qu'il comporte un dispositif de repliage/dépliage d'une poutre de queue tel que précédemment décrit.

Autrement dit, un tel giravion comporte au niveau d'une poutre de queue des moyens de désaccouplement/d'accouplement motorisés permettant de désaccoupler/accoupler mécaniquement l'arbre arrière de transmission de puissance préalablement au déplacement relatif en rotation de la portion mobile de la poutre de queue par rapport à la portion fixe.

Ce giravion présente ainsi un encombrement optimal en longueur et en largeur permettant notamment de faciliter son transport ou son stockage dans un bateau, un avion ou encore dans un hangar.

Enfin comme déjà évoqué, l'invention concerne un procédé de repliage/dépliage d'une poutre de queue de giravion comportant au moins un rotor arrière. Un tel rotor arrière est ainsi entrainé en rotation au moyen d'au moins un moteur et d'au moins un arbre arrière de transmission de puissance. Un tel procédé de repliage/dépliage est mis en oeuvre lorsque le moteur, l'arbre arrière de transmission de puissance et le rotor arrière sont respectivement à l'arrêt.

En outre, ce procédé de repliage/dépliage comporte :
- une première étape consistant à désaccoupler mécaniquement deux parties d'un même arbre arrière de transmission de puissance,
- une deuxième étape de déverrouillage dans une position dépliée de travail d'une portion mobile de la poutre de queue par rapport à une portion fixe de la poutre de queue, la position dépliée de travail de la portion mobile permettant à l'arbre arrière de transmission de puissance de transmettre un couple moteur au rotor arrière,
- une troisième étape de repliage de la portion mobile par rapport à la portion fixe, un tel repliage correspondant à un déplacement relatif en rotation d'un angle β de la portion mobile entre deux positions extrémales distinctes, à savoir la position dépliée de travail et une position repliée de repos permettant de réduire l'encombrement en longueur du giravion,
- une quatrième étape de dépliage de la portion mobile par rapport à la portion fixe, un tel dépliage correspondant au déplacement relatif en rotation d'un angle -β de la portion mobile entre deux positions extrémales distinctes, à savoir la position repliée de repos et la position dépliée de travail,
- une cinquième étape consistant à accoupler mécaniquement les deux parties de ce même arbre arrière de transmission de puissance, et
- une sixième étape de verrouillage dans la position dépliée de travail de la portion mobile de la poutre de queue par rapport à la portion fixe de la poutre de queue.

Selon l'invention, ce procédé de repliage/dépliage se caractérise en que :
- la première étape et la troisième étape sont réalisées indépendamment l'une de l'autre, la première étape étant mise en oeuvre préalablement à la troisième étape, et
- la cinquième étape et la quatrième étape sont réalisées indépendamment l'une de l'autre, la cinquième étape étant mise en oeuvre postérieurement à la quatrième étape.

De cette manière, on dissocie et rend indépendante chacune des actions consistant à désaccoupler/accoupler les deux parties de ce même arbre arrière de transmission de puissance et à faire pivoter la portion mobile de la poutre de queue autour d'un axe de rotation.

Par ailleurs, pour mettre en oeuvre la troisième étape de déplacement relatif en rotation entre les deux portions de la poutre de queue, il est également nécessaire de réaliser préalablement une deuxième étape de déverrouillage dans une position dépliée de travail de la portion mobile par rapport à la portion fixe. Cette deuxième étape peut ainsi être réalisée antérieurement, simultanément ou postérieurement à la première étape du procédé de repliage/dépliage.

En pratique, on peut désaccoupler/accoupler mécaniquement les deux parties du même arbre arrière de transmission de puissance via des moyens de désaccouplement/d'accouplement motorisés permettant de déplacer axialement en translation un crabot par rapport à une première partie de l'arbre arrière de transmission de puissance selon une direction longitudinale de l'arbre arrière de transmission de puissance, le crabot étant apte à se désaccoupler/s'accoupler avec une cloche de forme complémentaire solidaire d'une deuxième partie de l'arbre arrière de transmission de puissance.

Dans ce cas, on commande le désaccouplement/accouplement entre les deux parties de l'arbre arrière de transmission de puissance en actionnant de façon indépendante le déplacement en translation du crabot par rapport au déplacement en rotation de la portion mobile de la poutre de queue par rapport à la portion fixe. Les moyens de désaccouplement/d'accouplement motorisés peuvent donc actionnés préalablement à la troisième étape de repliage de la portion mobile puis postérieure à la quatrième étape de dépliage de de la portion mobile.

Avantageusement, la première étape peut être effectuée simultanément avec la deuxième étape de déverrouillage en position dépliée de travail de la portion mobile par rapport à la portion fixe, et de même, la cinquième étape peut être effectuée simultanément avec la sixième étape de verrouillage en position dépliée de travail de la portion mobile par rapport à la portion fixe.

Ainsi dans ce cas, une fois le désaccouplement mécanique réalisé sur l'arbre arrière de transmission de puissance, il est certain que le déverrouillage permettant la rotation de la portion mobile est effectué.

Bien entendu comme déjà indiqué et selon d'autres exemples de réalisation du procédé de repliage/dépliage, la deuxième étape de déverrouillage peut également être effectuée préalablement ou postérieurement à la première étape de désaccouplement mécanique des deux parties du même arbre arrière de transmission de puissance.

Par ailleurs et selon un premier exemple de réalisation du procédé de repliage/dépliage, on peut désaccoupler/accoupler mécaniquement les deux parties du même arbre arrière de transmission de puissance et on peut déverrouiller/verrouiller la portion mobile de la poutre de queue dans la position dépliée de travail avec un unique actionneur.

Dans ce cas, une consigne de commande unique est alors nécessaire pour réaliser les deux opérations. L'actionneur commun est apte à réaliser simultanément le désaccouplement/accouplement mécanique des deux parties de l'arbre arrière de transmission de puissance et le déverrouillage/verrouillage dans la position dépliée de travail de la portion mobile par rapport à la portion fixe.

Selon un deuxième exemple de réalisation du procédé de repliage/dépliage, on peut désaccoupler/accoupler mécaniquement les deux parties du même arbre arrière de transmission de puissance avec un premier actionneur et on peut déverrouiller/verrouiller la portion mobile de la poutre de queue dans la position dépliée de travail avec un second actionneur distinct du premier actionneur.

De cette façon, on peut commander de façon indépendante les actions consistant à désaccoupler/accoupler les deux parties de l'arbre arrière de transmission de puissance et à déverrouiller/verrouiller dans la position dépliée de travail la portion mobile de la poutre de queue.

L'invention et ses avantages apparaîtront avec plus de détails dans le cadre de la description qui suit avec des exemples donnés à titre illustratif en référence aux figures annexées qui représentent :
- la figure 1, une vue de côté d'un giravion conforme à l'invention,
- la figure 2, une vue de dessus d'un giravion conforme à l'invention,
- la figure 3, une vue de côté d'un giravion montrant les deux positions extrémales d'une portion mobile d'une poutre de queue, conformément à l'invention,
- les figures 4 et 5, des schémas de principe selon un premier mode de réalisation d'un dispositif de repliage/dépliage conforme à l'invention,
- les figures 6 et 7, des schémas de principe selon deux variantes d'un deuxième mode de réalisation d'un dispositif de repliage/dépliage conforme à l'invention,
- la figure 8, un schéma de principe selon un troisième mode de réalisation d'un dispositif de repliage/dépliage conforme à l'invention, et
- la figure 9, un logigramme partiel du procédé de repliage/dépliage conforme à l'invention.

Les éléments présents dans plusieurs figures distinctes sont affectés d'une seule et même référence.

Comme déjà évoqué, l'invention se rapporte à un dispositif de repliage/dépliage d'une poutre de queue de giravion.

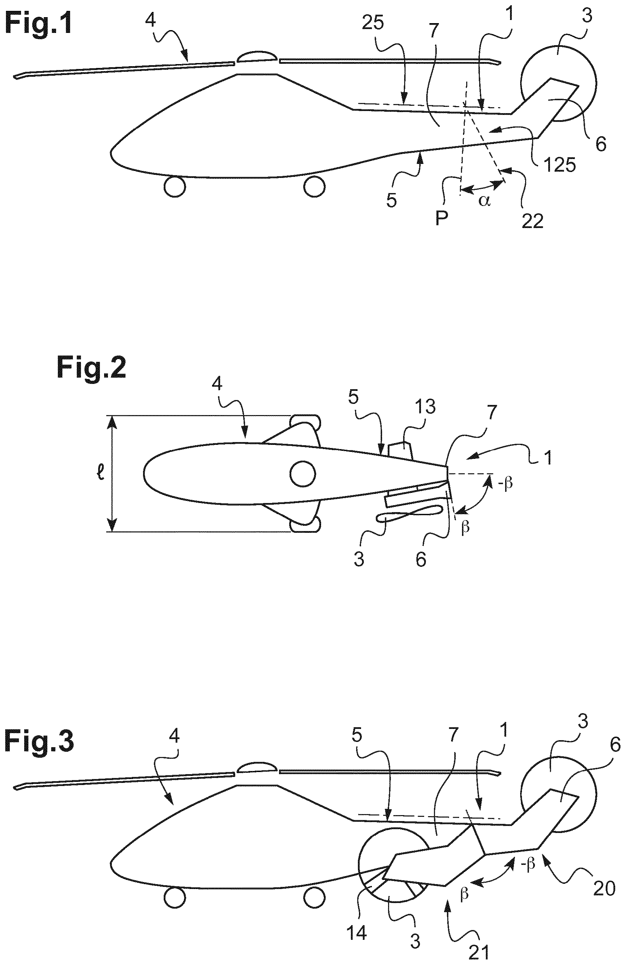

Ainsi et tel que représenté à la figure 1, le giravion 4 comporte un dispositif de repliage/dépliage 1 agencé au niveau d'une poutre de queue 5. Un tel dispositif de repliage/dépliage 1 comporte des moyens rotatifs 125 permettant notamment de déplacer suivant un mouvement de rotation une portion mobile 6 de la poutre de queue 5 supportant un rotor arrière 3.

Par ailleurs, un tel mouvement de rotation s'effectue autour d'un axe de rotation 22 incliné d'un angle α par rapport à un plan P perpendiculaire à une direction longitudinale 25 parallèle à un arbre arrière de transmission de puissance permettant de transmettre un couple moteur au rotor arrière 3. De plus, un tel angle α est avantageusement compris entre 20 degrés et 30 degrés et peut plus particulièrement être égal à 26 degrés afin de garantir un angle de repliage/dépliage maximal de la portion mobile par rapport à la portion fixe 7 de la poutre de queue 5.

Tel que représenté à la figure 2, un angle de repliage/dépliage β/-β peut avantageusement présenter une amplitude maximale d'environ 170 degrés. De plus, la portion mobile 6 de la poutre de queue 5 peut comporter un stabilisateur horizontal 13, par exemple de type empennage horizontal, apte à venir se positionner en dessous la portion fixe 7 de la poutre de queue 5. Par ailleurs, l'angle de repliage/dépliage β/-β correspond, en vue de dessus, à un angle d'ouverture de la portion mobile 6 par rapport à la portion fixe 7 de poutre de queue 5.

Une telle amplitude maximale de l'angle de repliage/dépliage β/-β est ainsi rendue possible par l'inclinaison d'un angle α de l'axe de rotation 22 par rapport au plan P. Elle permet ainsi de ne pas augmenter l'encombrement en largeur *ℓ* du giravion 4 par le repliage de la portion mobile 6.

En outre et tels que représentés à la figure 3, les moyens rotatifs 125 permettent de déplacer en rotation la portion mobile 6 entre deux positions extrémales 20, 21 correspondant respectivement à une position dépliée de travail 20 et une position repliée de repos 21 permettant de réduire l'encombrement en longueur du giravion 4. Avantageusement, dans cette position de repos 21 de la portion mobile 6, les pales 14 du rotor arrière 3 ne touchent pas le sol.

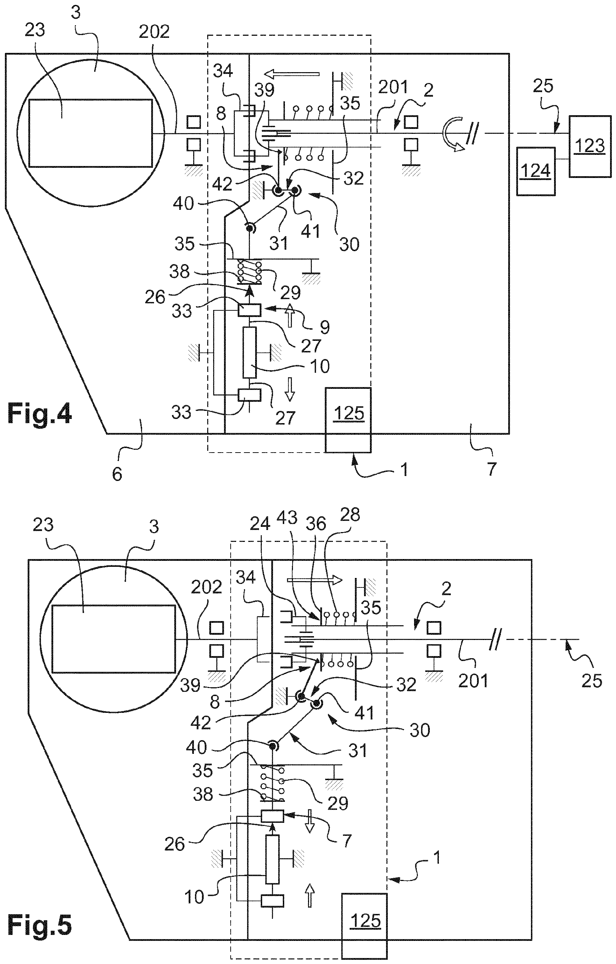

Selon l'invention, et tels que représentés aux figures 4 à 8, le dispositif de repliage/dépliage 1, 71, 81, 11 comporte également des moyens de désaccouplement/d'accouplement 8, 108, 118, 18 motorisés permettant de désaccoupler/accoupler mécaniquement deux parties 201-211-271-281, 202-212-272-282 d'un même arbre arrière de transmission de puissance 2, 72, 82, 12 du rotor arrière 3 avant d'actionner les moyens rotatifs 125 et donc de procéder au repliage/dépliage de la portion mobile 6 de la poutre de queue 5.

Avantageusement, le dispositif de repliage/dépliage 1, 71, 81, 11 peut également comporter des moyens de déverrouillage/verrouillage 9, 109, 119, 19 permettant d'immobiliser la portion mobile 6 dans la position dépliée de travail 21. En outre, un tel dispositif de repliage/dépliage 1, 71, 81, 11 peut également comporter des moyens de "blocage", non représentés, permettant d'immobiliser la portion mobile 6 dans la position repliée de repos 20.

Par ailleurs, les moyens de désaccouplement/d'accouplement 8, 108, 118, 18 et les moyens de déverrouillage/verrouillage 9, 109, 119, 19 peuvent être formés selon différents modes de réalisation pour permettre l'accouplement/désaccouplement mécanique des deux parties 201-271-281-211, 202-272-282-212 de l'arbre arrière de transmission de puissance 2, 72, 82, 12 indépendamment du mouvement de rotation de la portion mobile 6.

Ainsi, selon un premier mode de réalisation tel que représenté aux figures 4 et 5, les moyens de désaccouplement/d'accouplement 8 et les moyens de déverrouillage/verrouillage 9 peuvent comporter un actionneur commun 10 tel un vérin hydraulique, pneumatique ou encore électrique. Cet actionneur commun 10 permet de déplacer selon deux sens différents deux doigts 27 agencés de part et d'autre du corps de l'actionneur 10. De tels doigts 27 coopèrent chacun avec des ferrures ou gonds 33 et réalisent ainsi la fonction de verrouillage/déverrouillage de la portion mobile 6 en position dépliée 20 afin d'empêcher toute ouverture involontaire de la poutre de queue 5.

Par ailleurs, en plus de la fonction de verrouillage, l'un des deux doigts 27 permet également d'entrainer et de déplacer en translation une tige 26 pour transmettre le mouvement de translation produit par l'actionneur 10 aux moyens de désaccouplement/d'accouplement 8. Pour ce faire, le déplacement en translation de la tige 26 est transmis à un organe de liaison 30 puis aux moyens de désaccouplement/d'accouplement 8. Une telle tige 26 est ainsi agencée de manière coaxiale avec les doigts 27 de l'actionneur 10.

En outre, l'organe de liaison 30 comporte quant à lui au moins une bielle 31 et au moins un renvoi d'angle de liaison 32 permettant de modifier la direction de déplacement en translation selon une direction parallèle à une direction longitudinale 25 de l'arbre arrière de transmission de puissance 2. La direction de déplacement en translation des doigts 27 est orientée parallèlement à l'axe de rotation entre la portion mobile 6 et la portion fixe 7 et est donc inclinée d'un angle a par rapport à un plan P perpendiculaire à la direction longitudinale 25 de l'arbre arrière de transmission de puissance 2.

Tel que représenté à la figure 4, l'actionneur commun 10 est agencé dans une position de verrouillage de la portion mobile 6 par rapport à la portion fixe 7 correspondant à la sortie des doigts 27 du corps de l'actionneur 10.

L'activation de l'actionneur 10 dans cette position de verrouillage représentée à la figure 4 permet d'une part, de décomprimer un premier moyen de rappel élastique 28 agissant sur un crabot 24 mobile en translation selon la direction longitudinale 25 de l'arbre arrière de transmission de puissance 2, et d'autre part, de comprimer un second moyen de rappel élastique 29.

Le premier moyen de rappel élastique 28 est en effet sollicité en compression entre une face plane 36 du crabot 24 et un châssis 35 solidaire de la portion fixe 7 de la poutre de queue.

Par ailleurs, l'effort exercé par l'actionneur 10 pour parvenir à cette position de verrouillage est choisi avantageusement supérieur à l'effort de compression exercé par le second moyen de rappel élastique 29 sur la tige 26. Le second moyen de rappel élastique 29 est quant à lui sollicité en compression entre une face plane 38 de la tige 26 et le châssis 35.

Dans la position de l'actionneur 10 dite "normalement sortie" et telle que représentée à la figure 4, un couple moteur issu du moteur 124 puis d'une boite de transmission principale de puissance 123 peut alors être transmis entre les parties 201 et 202 de l'arbre arrière de transmission de puissance 2 à une boite de transmission arrière de puissance 23 et un rotor arrière 3. Pour ce faire, le couple moteur est transmis par la partie 201 au crabot 24 puis des dents du crabot 24 coopérant avec des rainures de forme complémentaire ménagées dans une cloche 34 transmettent le couple moteur à la cloche 34 solidaire de la partie 202 de l'arbre arrière de transmission de puissance 2.

De plus, en cas de panne de l'actionneur 10, comme par exemple en cas de fuite ou d'une rupture du circuit d'alimentation hydraulique de l'actionneur 10, les doigts 27 restent en position "sortie de verrouillage" afin de garantir que la portion mobile 6 reste dans sa position extrémale dépliée de travail 20. Pour obtenir un tel résultat, la seconde force de rappel élastique exercée par le second moyen de rappel élastique 29 est choisie supérieure à la première force de rappel élastique exercée par le premier moyen de rappel élastique 28.

De cette façon, et tel que représenté à la figure 5, lorsque l'actionneur 10 est piloté pour procéder au déverrouillage de la portion mobile 6, la tige 26 recule vers le corps de l'actionneur 10, le second moyen de rappel élastique 29 se détend en comprimant le premier moyen de rappel élastique 28 via l'organe de liaison 30. Le renvoi d'angle de liaison 32 peut comporter un bras de levier 41 permettant notamment d'obtenir une démultiplication de l'effort produit par le second moyen de rappel élastique. Le bras de levier 41 permet ainsi d'obtenir une seconde force de rappel élastique supérieure à la première force avec des premier 28 et second 29 moyens de rappel élastique de même raideur.

En outre, la bielle 31 de l'organe de liaison mécanique 30 est agencée au niveau de ses deux extrémités libres en liaison rotule, d'une part, avec une extrémité libre 40 de la tige 26 et, d'autre part, avec le bras de levier 41 du renvoi d'angle de liaison 32. Un tel renvoi d'angle de liaison 32 comporte par ailleurs au moins un degré de liberté en rotation agencé au niveau d'une liaison 42 avec le châssis 35 de la portion fixe 7. Une telle liaison 42 est donc choisie parmi le groupe comportant les liaisons pivots c'est-à-dire comportant un degré de liberté en rotation, les liaisons rotules à doigt c'est-à-dire comportant deux degrés de liberté en rotation et les liaisons rotules c'est-à-dire comportant trois degrés de liberté en rotation.

Enfin, le mouvement de rotation transmis au renvoi d'angle de liaison 32 permet de déplacer un poussoir 39 en contact ponctuel ou linéaire avec une face plane 43 du crabot 24 opposée à la face plane 36 d'appui du premier moyen de rappel élastique 28. Le poussoir 39 permet ainsi de déplacer le crabot 24 en translation le long de la direction longitudinale 25 de l'arbre arrière de transmission de puissance 2

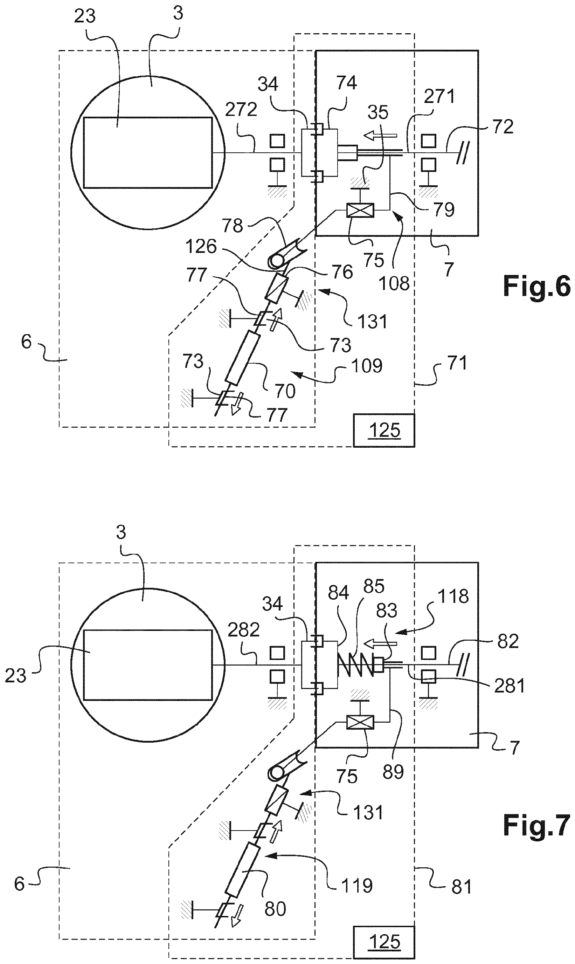

Tel que représenté aux figures 6 et 7, selon deux variantes distinctes d'un deuxième mode de réalisation, l'organe de liaison mécanique 130, 131 du dispositif de repliage/dépliage 71, 81 peut se présenter sous une forme différente de celle présentée aux figures 4 et 5.

Ainsi, tel que représenté aux figures 6 et 7, l'organe de liaison mécanique 130, 131 permet de déplacer en translation le crabot 74, 84 selon une direction parallèle à l'arbre arrière de transmission de puissance 72, 82 au moyen d'un unique actionneur 70, 80 comme aux figures 4 et 5. Cependant, dans ce deuxième mode de réalisation, l'organe de liaison mécanique 130, 131 comporte une excroissance 79, 89 agencée en liaison glissière 75 avec le châssis 35.

De plus, une extrémité libre de l'excroissance 79, 89 est agencée en liaison linéaire annulaire 78 avec une extrémité libre d'une tige 126. Un tel agencement permet alors de transformer le déplacement en translation des doigts 77 de l'actionneur 70, 80 dans la direction longitudinale de l'arbre arrière de transmission de puissance 72, 82.

Par ailleurs, les doigts 77 forment avec les gonds 73 les moyens de déverrouillage/verrouillage 109, 119 du dispositif de repliage/dépliage 71, 81. Ils permettent également de déplacer en translation la tige 126 agencée par ailleurs en liaison hélicoïdale 76 avec le châssis 35.

Tels que représentés à la figure 6, selon une première variante du deuxième mode de réalisation, les moyens de désaccouplement/d'accouplement 108 comportent le crabot 74 formé de manière monolithique avec l'excroissance 79.

Cependant, tels que représentés à la figure 7, selon une deuxième variante du deuxième mode de réalisation, les moyens de désaccouplement/d'accouplement 118 comportent le crabot 84 et l'excroissance 79 disjoints l'un de l'autre. Dans ce cas, l'excroissance 89 est solidaire d'une fourchette 83 mobile en translation par rapport à l'arbre arrière de transmission de puissance 82 et au crabot 84 selon une direction parallèle à la direction longitudinale de l'arbre arrière de transmission de puissance 82.

De plus, un moyen de rappel élastique 85 peut être sollicité en compression et agencé entre le crabot 84 et la fourchette 83 de façon à sécuriser le maintien en position accouplée du crabot 84 avec la cloche 34 solidaire de la partie 271 de l'arbre de transmission de puissance 72. Une telle cloche 34 constitue donc un organe récepteur du couple moteur du dispositif de repliage/dépliage 71.

Comme précédemment indiqué, les moyens de désaccouplement/d'accouplement 108, 118 ici représentés sont motorisés et peuvent être actionnés indépendamment des moyens rotatifs 125 pour permettre de désaccoupler mécaniquement les deux parties 271-281, 272-282 de l'arbre arrière de transmission de puissance 72, 82 avant de réaliser le déplacement relatif en rotation de la portion mobile 6 de la poutre de queue par rapport à la portion fixe 7 de la poutre de queue 5.

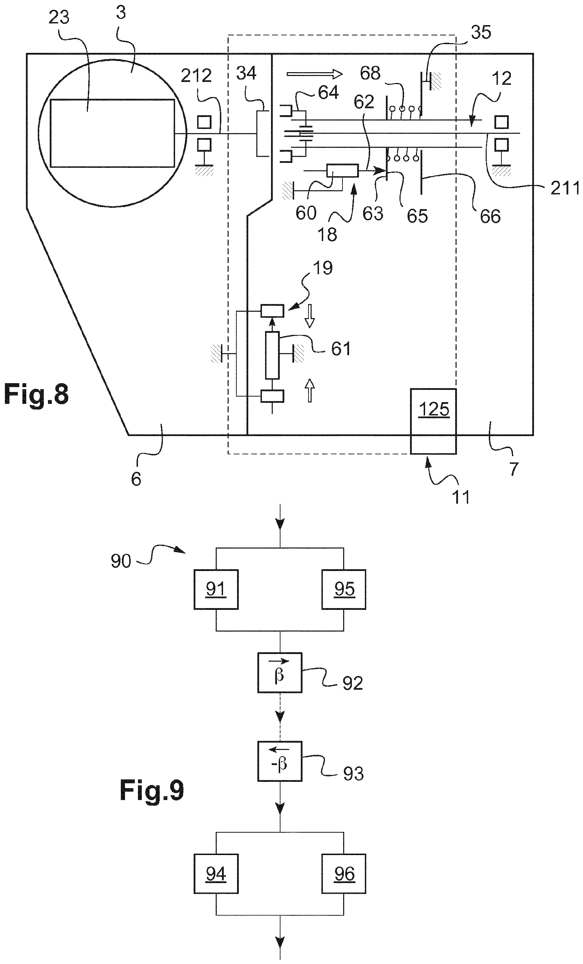

Enfin selon un troisième mode de réalisation tel que représenté à la figure 8, les moyens de désaccouplement/d'accouplement 18 comportent un premier actionneur 60 indépendant et les moyens de déverrouillage/verrouillage 19 comportent quant à eux un second actionneur 61 distinct du premier actionneur 60.

Comme précédemment, un tel troisième mode de réalisation permet d'actionner individuellement de façon indépendante les moyens de désaccouplement/d'accouplement 18 et les moyens de déverrouillage/verrouillage 19 préalablement aux moyens rotatifs 125.

Dans ce cas, un doigt 62 de l'actionneur 60 peut repousser directement une face plane 63 du crabot 64 pour réaliser le déplacement en translation du crabot 64 par rapport à l'arbre arrière de transmission de puissance 12 et ainsi l'accouplement/désaccouplement mécanique entre les deux parties 211, 212 de l'arbre arrière de transmission de puissance 12.

De plus, en cas de défaillance de l'actionneur 60 ou de son circuit d'alimentation, par exemple hydraulique, un moyen de rappel élastique 68 sollicité en compression permet alors d'accoupler automatiquement le crabot 64 avec la cloche 34 agencée en regard. Un tel moyen de rappel élastique 68 est par exemple agencé entre une face plane 66 du châssis 35 et une face plane 65 du crabot 64 opposée à la face plane 63.

Par ailleurs, quel que soit le mode de réalisation, la rotation de la portion mobile 6 par rapport à la portion fixe 7 peut être effectuée manuellement par un opérateur tel un mécanicien ou de façon automatisée au moyen d'un actionneur spécifique non représenté aux figures 4 à 8.

Tel que représenté à la figure 9, l'invention se rapporte également à un procédé de repliage/dépliage 90 d'un arbre arrière de transmission de puissance 2, 72, 82, 12 d'un rotor arrière 3 de giravion 4.

Un tel rotor arrière 3 est entrainé en rotation au moyen d'au moins un moteur 124 et d'un arbre arrière de transmission de puissance 2, 72, 82, 12 et est agencé au niveau d'une poutre de queue 5.

Par ailleurs, un tel procédé de repliage/dépliage 90 est mis en oeuvre lorsque le moteur 124, l'arbre arrière de transmission de puissance 2, 72, 82, 12 et le rotor arrière 3 sont respectivement à l'arrêt.

Le procédé de repliage/dépliage 90 comporte en outre une première étape 91 consistant à désaccoupler mécaniquement deux parties d'un même arbre arrière de transmission de puissance.

Un tel procédé 90 comporte également une troisième étape 92 de repliage consistant à déplacer selon un mouvement de rotation d'un angle β la portion mobile 6 d'une poutre de queue 5 par rapport à la portion fixe 7 d'une poutre de queue 5. Un tel repliage est utilisé pour permettre le stockage ou le transport du giravion 4 en réduisant ainsi au moins son encombrement en longueur.

Le procédé 90 comporte alors une quatrième étape 93 de dépliage consistant à déplacer selon un mouvement de rotation d'un angle -β la portion mobile 6 d'une poutre de queue 5 par rapport à la portion fixe 7 d'une poutre de queue 5. Un tel dépliage est utilisé lorsque le giravion 4 doit être mis en fonctionnement et utilisé une fois stockage ou son transport terminé.

Enfin, un tel procédé 90 comporte une cinquième étape 94 consistant à accoupler mécaniquement les deux parties de ce même arbre arrière de transmission de puissance notamment lorsque l'on souhaite utiliser le giravion 4.

Comme déjà explicité précédemment, les troisième et quatrième étapes 92, 93 peuvent être réalisées manuellement par un opérateur ou automatiquement via un actionneur spécifique hydraulique, pneumatique ou électrique permettant de faire pivoter la portion mobile de la poutre de queue par rapport à la portion fixe.

Selon ce procédé de repliage/dépliage 90, préalablement à la troisième étape 92 de repliage, on met en oeuvre indépendamment la première étape 91 consistant à désaccoupler mécaniquement les deux parties de cet arbre arrière de transmission de puissance.

Ainsi, une telle première étape 91 est motorisée ou automatisée et peut avantageusement être exécutée simultanément avec une deuxième étape 95 de déverrouillage consistant à déverrouiller la portion mobile de la poutre de queue lorsque celle-ci est agencée dans une position dépliée de travail 20.

De même selon ce procédé de repliage/dépliage 90, postérieurement à la quatrième étape 93 de dépliage, on met en oeuvre indépendamment la cinquième étape 94 consistant à accoupler mécaniquement les deux parties de cet arbre arrière de transmission de puissance.

Ainsi, une telle cinquième étape 94 est motorisée ou automatisée et peut avantageusement être exécutée simultanément avec une sixième étape 96 de verrouillage consistant à verrouiller la portion mobile de la poutre de queue lorsque celle-ci est agencée dans une position dépliée de travail 20.

La première étape 91 et la deuxième étape 95 de déverrouillage peuvent être mises en oeuvre par divers moyens correspondant à différents modes de réalisation.

Ainsi selon un premier et un deuxième modes de réalisation, la première étape 91 et la deuxième étape 95 de déverrouillage peuvent être réalisées au moyen d'un actionneur commun 10.

Au contraire et selon un troisième mode de réalisation, la première étape 91 peut être réalisée au moyen d'un premier actionneur 60 et la deuxième étape 95 de déverrouillage peut être réalisée au moyen d'un second actionneur 61 différent du premier actionneur 60.

De même, la cinquième étape 94 consistant à accoupler mécaniquement les deux parties du même arbre arrière de transmission de puissance et la sixième étape 96 de verrouillage peuvent être mises en oeuvre par divers moyens correspondant à différents modes de réalisation mais correspondent aux moyens permettant de mettre en oeuvre la première étape 91 et la deuxième étape 95 de déverrouillage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de repliage/dépliage (1, 71, 81, 11) pour une poutre de queue (5) de giravion (4), ledit dispositif de repliage/dépliage (1, 71, 81, 11) étant apte à être agencé sur ladite poutre de queue (5) au niveau d'un arbre arrière de transmission de puissance (2, 72, 82, 12) en amont d'une boite de transmission de puissance arrière (23) et en aval d'une boite de transmission de puissance principale (123) reliées mécaniquement à au moins un moteur (124) du giravion (4), ledit arbre arrière de transmission de puissance (2, 72, 82, 12) étant apte à transmettre un couple moteur et à entraîner en rotation un rotor arrière (3) dudit giravion (4), ledit dispositif de repliage/dépliage (1, 71, 81, 11) comportant :
- des moyens de désaccouplement/d'accouplement (8, 108, 118, 18) mécanique entre deux parties (201-271-281-211, 202-272-282-212) dudit même arbre arrière de transmission de puissance (2, 72, 82, 12) agencées respectivement en amont et en aval dudit dispositif de repliage/dépliage (1, 71, 81, 11), et
- des moyens rotatifs (125) permettant de réaliser un déplacement relatif en rotation entre une portion mobile (6) de ladite poutre de queue (5) et une portion fixe (7) de ladite poutre de queue (5), ledit déplacement relatif en rotation s'effectuant entre deux positions extrémales distinctes, à savoir une position dépliée de travail (20) permettant audit arbre arrière de transmission de puissance (2, 72, 82 12) de transmettre un couple moteur audit rotor arrière (3) et une position repliée de repos (21) permettant de réduire l'encombrement en longueur dudit giravion (4) lorsque ledit moteur (124), ledit arbre arrière de transmission de puissance (2, 72, 82, 12) et le rotor arrière (3) sont à l'arrêt,
**caractérisé en ce que** les moyens de désaccouplement/ d'accouplement (8, 108, 118, 18) sont motorisés et peuvent être actionnés indépendamment des moyens rotatifs (125) pour, d'une part, désaccoupler mécaniquement les deux parties (201-271-281-211, 202-272-282-212) dudit même arbre arrière de transmission de puissance (2, 72, 82, 12) préalablement au déplacement relatif en rotation correspondant au repliage de la portion mobile (6) par rapport à la portion fixe (7) de la poutre de queue (5) et, d'autre part, accoupler mécaniquement les deux parties (201-271-281-211, 202-272-282-212) dudit même arbre arrière de transmission de puissance (2, 72, 82, 12) postérieurement au déplacement relatif en rotation correspondant au dépliage de la portion mobile (6) par rapport à la portion fixe (7) de la poutre de queue (5).

2. Dispositif selon la revendication 1,
**caractérisé en ce que** ledit dispositif de repliage/dépliage (1, 71, 81, 11) comporte des moyens de déverrouillage/verrouillage (9, 109, 119, 19) en position dépliée de travail (20) de ladite portion mobile (6) de la poutre de queue (5) par rapport à ladite portion fixe (7) de la poutre de queue (5).

3. Dispositif selon la revendication 2,
**caractérisé en ce que** lesdits moyens de désaccouplement/d'accouplement (8, 108, 118) et lesdits moyens de déverrouillage/verrouillage (9, 109, 119) sont actionnés par un actionneur commun (10, 70, 80).

4. Dispositif selon la revendication 3,
**caractérisé en ce que** lesdits moyens de désaccouplement/d'accouplement (8) comportent un premier moyen de rappel élastique (28) sollicité en compression et dont les extrémités libres prennent respectivement appui sur un châssis (35) de la portion fixe (7) et sur une face plane (36) d'un crabot (24) mobile en translation selon une direction parallèle à une direction longitudinale (25) dudit arbre arrière de transmission de puissance (2) et lesdits moyens de déverrouillage/verrouillage (9) comportent un second moyen de rappel élastique (29) sollicité en compression et dont les extrémités libres prennent respectivement appui sur ledit châssis (35) de la portion fixe (7) et sur une face plane (38) d'une tige (26) desdits moyens de déverrouillage/verrouillage (9).

5. Dispositif selon la revendication 4,
**caractérisé en ce que** ledit premier moyen de rappel élastique (28) permet d'exercer une première force de rappel sur ledit crabot (24) et ledit second moyen de rappel élastique (29) permet d'exercer une seconde force de rappel sur ladite tige (26) des moyens de déverrouillage/verrouillage (9), ladite première force de rappel étant inférieure à la seconde force de rappel.

6. Dispositif selon la revendication 3,
**caractérisé en ce que** ledit dispositif de repliage/dépliage (1, 71, 81) comporte un organe de liaison mécanique (30, 130, 131) permettant un actionnement simultané desdits moyens de désaccouplement/d'accouplement (8, 108, 118) et desdits moyens de déverrouillage/verrouillage (9, 109, 119) avec ledit actionneur commun (10, 70, 80).

7. Dispositif selon les revendications 4 et 6,
**caractérisé en ce que** ledit organe de liaison mécanique (30) comporte au moins une bielle (31), au moins un renvoi d'angle de liaison (32) comportant au moins un degré de liberté en rotation par rapport audit châssis (35) et un poussoir (39) permettant d'exercer un effort de poussée sur ladite face plane (36) dudit crabot (24), les extrémités libres de ladite bielle (31) étant respectivement agencées en liaison rotule avec d'une part une extrémité libre de ladite tige (26) et d'autre part une extrémité libre d'un bras de levier (41) dudit renvoi d'angle de liaison (32), ledit organe de liaison mécanique (30) permettant à l'actionneur commun (10) de déplacer en translation ledit crabot (24) mobile selon une direction parallèle à ladite direction longitudinale (25) dudit arbre arrière de transmission de puissance (2).

8. Dispositif selon la revendication 6,
**caractérisé en ce que** ledit organe de liaison mécanique (130, 131) comporte au moins une excroissance (79, 89) apte à commander le déplacement en translation d'un crabot (74, 84), ladite excroissance (79, 89) étant agencée en liaison glissière (75) avec un châssis (35) de la portion fixe (7) de la poutre de queue (5) et comportant une extrémité libre agencée en liaison linéaire annulaire (78) avec une extrémité libre d'une tige (126), ladite tige (126) étant agencée en liaison hélicoïdale (76) avec ledit châssis (35) pour transformer le déplacement en translation d'au moins un doigt (77) de l'actionneur (70, 80) en un mouvement combiné de rotation et de translation de ladite tige (126) par rapport audit châssis (35).

9. Dispositif selon la revendication 2,
**caractérisé en ce que** lesdits moyens de désaccouplement/d'accouplement (18) comportent un premier actionneur (60) et lesdits moyens de déverrouillage/verrouillage (19) comportent un second actionneur (61) distinct dudit premier actionneur (60).

10. Dispositif selon l'une quelconque des revendications 1 à 9,
**caractérisé en ce que** lesdits moyens rotatifs (125) comportent un axe de rotation (22) incliné d'un angle prédéterminé α par rapport à un plan P perpendiculaire à une direction longitudinale (25) dudit arbre arrière de transmission de puissance (2, 12) ledit angle prédéterminé α étant compris entre 20 degrés et 30 degrés.

11. Giravion (4) équipé d'un rotor arrière (3) agencé au niveau d'une poutre de queue (5), ledit rotor arrière (3) étant entrainé en rotation au moyen d'au moins un moteur (124) et d'un arbre arrière de transmission de puissance (2, 72, 82, 12) et ladite poutre de queue (5) comportant une portion mobile (6) en rotation par rapport à une portion fixe (7) entre deux positions extrémales distinctes, à savoir une position dépliée de travail (20) permettant audit arbre arrière de transmission de puissance (2, 72, 82, 12) de transmettre un couple moteur audit rotor arrière (3) et une position repliée de repos (21) permettant de réduire l'encombrement en longueur dudit giravion (4) lorsque ledit moteur (124), ledit arbre arrière de transmission de puissance (2, 72, 82, 12) et le rotor arrière (3) sont à l'arrêt,
**caractérisé en ce que** ledit giravion (4) comporte un dispositif de repliage/dépliage (1, 71, 81, 11) d'une poutre de queue (5) selon l'une quelconque des revendications 1 à 10.

12. Procédé de repliage/dépliage (90) d'une poutre de queue (5) de giravion (4) comportant au moins un rotor arrière (3), ledit rotor arrière (3) étant entrainé en rotation au moyen d'au moins un moteur (124) et d'au moins un arbre arrière de transmission de puissance (2, 72, 82, 12), ledit procédé de repliage/dépliage (90) étant mis en oeuvre lorsque ledit au moins un moteur (124), ledit arbre arrière de transmission de puissance (2, 72, 82, 12) et ledit rotor arrière (3) sont respectivement à l'arrêt, ledit procédé de repliage/dépliage (90) comportant :
- une première étape (91) consistant à désaccoupler mécaniquement deux parties (201-271-281-211, 202-272-282-212) d'un même arbre arrière de transmission de puissance (2, 72, 82, 12),
- une deuxième étape (95) de déverrouillage dans une position dépliée travail (20) d'une portion mobile (6) de ladite poutre de queue (5) par rapport à une portion fixe (7) de ladite poutre de queue (5), ladite position dépliée de travail (20) de ladite portion mobile (6) permettant audit arbre arrière de transmission de puissance (2, 72, 82, 12) de transmettre un couple moteur audit rotor arrière (3),
- une troisième étape (92) de repliage de ladite portion mobile (6) par rapport à ladite portion fixe (7), ledit repliage correspondant à un déplacement relatif en rotation d'un angle (β) de ladite portion mobile (6) entre deux positions extrémales distinctes, à savoir ladite position dépliée de travail (20) et une position repliée de repos (21) permettant de réduire l'encombrement en longueur dudit giravion (4),
- une quatrième étape (93) de dépliage de ladite portion mobile (6) par rapport à la portion fixe (7), ledit dépliage correspondant à un déplacement relatif en rotation d'un angle (-β) de ladite portion mobile (6) entre deux positions extrémales distinctes, à savoir ladite position repliée de repos (21) et ladite position dépliée de travail (20),
- une cinquième étape (94) consistant à accoupler mécaniquement lesdites deux parties (201-271-281-211, 202-272-282-212) dudit même arbre arrière de transmission de puissance (2, 72, 82, 12), et
- une sixième étape (96) de verrouillage dans ladite position dépliée de travail (20) de ladite portion mobile (6) de ladite poutre de queue (5) par rapport à ladite portion fixe (7) de ladite poutre de queue (5),
ledit procédé de repliage/dépliage (90) étant **caractérisé en ce que** :
- ladite première étape (91) et ladite troisième étape (92) sont réalisées indépendamment l'une de l'autre, ladite première étape (91) étant mise en oeuvre préalablement à ladite troisième étape (92), et
- ladite cinquième étape (94) et ladite quatrième étape (93) sont réalisées indépendamment l'une de l'autre, ladite cinquième étape (94) étant mise en oeuvre postérieurement à ladite quatrième étape (93).

13. Procédé selon la revendication 12,
**caractérisé en ce qu'**on désaccouple/accouple mécaniquement les deux parties (201-271-281-211, 202-272-282-212) dudit même arbre arrière de transmission de puissance (2, 72, 82, 12) via des moyens de désaccouplement/d'accouplement (8, 108, 118, 18) motorisés permettant de déplacer axialement en translation un crabot (24, 74, 84, 64) par rapport à une première partie (201-271-281-211) dudit arbre arrière de transmission de puissance (2, 72, 82, 12) selon une direction longitudinale dudit arbre arrière de transmission de puissance (2, 72, 82, 12), ledit crabot (24, 74, 84, 64) étant apte à se désaccoupler/s'accoupler avec une cloche (34) de forme complémentaire solidaire d'une deuxième partie (202-272-282-212) dudit arbre arrière de transmission de puissance (2, 72, 82, 12).

14. Procédé selon l'une quelconque des revendications 12 à 13,
**caractérisé en ce que** ladite première étape (91) est effectuée simultanément avec ladite deuxième étape (95) de déverrouillage en position dépliée de travail (20) de ladite portion mobile (6) par rapport à ladite portion fixe (7) et ladite cinquième étape (94) est effectuée simultanément avec ladite sixième étape (96) de verrouillage en position dépliée de travail (20) de ladite portion mobile (6) par rapport à ladite portion fixe (7).

15. Procédé selon l'une quelconque des revendications 12 à 14,
**caractérisé en ce qu'**on désaccouple/accouple mécaniquement les deux parties (201-271-281, 202-272-282) dudit même arbre arrière de transmission de puissance (2, 72, 82) et on déverrouille/verrouille ladite portion mobile (6) de la poutre de queue (5) dans ladite position dépliée de travail (20) avec un unique actionneur (10, 70, 80).

16. Procédé selon l'une quelconque des revendications 12 à 14,
**caractérisé en ce qu'**on désaccouple/accouple mécaniquement lesdites deux parties (211, 212) dudit même arbre arrière de transmission de puissance (12) avec un premier actionneur (60) et on déverrouille/verrouille ladite portion mobile (6) de la poutre de queue (5) dans ladite position dépliée de travail (20) avec un second actionneur (61) distinct dudit premier actionneur (60).

## Patentansprüche

1. Ein- und Ausklappvorrichtung (1, 71, 81, 81, 81, 11) für einen Heckarm (5) eines Drehflüglers (4), wobei die Ein- und Ausklappvorrichtung (1, 71, 81, 11) eingerichtet ist, um an dem Heckarm (5) an einer hinteren Kraftübertragungswelle (2, 72, 82, 12) stromaufwärts von einem Heckgetriebe(23) und stromabwärts von einem Hauptgetriebe (123) angeordnet zu werden, die mechanisch mit mindestens einem Motor (124) des Drehflüglers (4) verbunden sind, wobei die hintere Kraftübertragungswelle (2, 72, 82, 12) eingerichtet ist, ein Motordrehmoment zu übertragen und einen Heckrotor (3) des Drehflüglers (4) zu drehen, wobei die Ein- und Ausklappvorrichtung (1, 71, 81, 11) umfasst:
- mechanische An-/Abkopplungsmittel (8, 168, 118, 18) zwischen zwei Teilen (201-271-281-211, 202-272-282-212) der gleichen hinteren Kraftübertragungswelle (2, 72, 82, 12), die jeweils stromaufwärts und stromabwärts der Ein- und Ausklappvorrichtung (1, 71, 81, 11) angeordnet sind, und
- Drehmittel (125) zum Durchführen einer relativen Drehbewegung zwischen einem beweglichen Abschnitt (6) des Heckarms (5) und einem festen Abschnitt (7) des Heckarms (5), wobei die relative Drehbewegung zwischen zwei verschiedenen Endpositionen stattfindet, nämlich einer ausgeklappten Arbeitsposition (20), die es der hinteren Kraftübertragungswelle (2, 72, 82 12) ermöglicht, ein Motordrehmoment auf den hinteren Rotor (3) zu übertragen, und einer eingeklappten Ruheposition (21), die es ermöglicht, die Länge des Drehflüglers (4) zu reduzieren, wenn der Motor (124), die hintere Kraftübertragungswelle (2, 72, 82, 12) und der hintere Rotor (3) stillstehen,
**dadurch gekennzeichnet, dass** die An-/Abkopplungsmittel (8, 108, 118, 18) motorisiert sind und unabhängig von den Drehmitteln (125) betreibbar sind, um einerseits die beiden Teile (201-271-281-211, 202-272-282-212) derselben hinteren Antriebswelle (2, 72, 82, 12) vor der relativen Drehbewegung, die dem Falten des beweglichen Abschnitts (6) in Bezug auf den festen Abschnitt (7) des Heckarms (5) entspricht, mechanisch zu entkoppeln, und andererseits die beiden Teile (201-271-281-211, 202-272-282-212) der gleichen hinteren Kraftübertragungswelle (2, 72, 82, 12) nach der relativen Drehbewegung, die dem Falten des beweglichen Abschnitts (6) in Bezug auf den festen Abschnitt (7) des Heckarms (5) entspricht, mechanisch zu koppeln.

2. Vorrichtung nach Anspruch 1, **dadurch gekennzeichnet, dass** die Ein- und Ausklappvorrichtung (1, 71, 81, 11) Mittel zum Entriegeln/Verriegeln (9, 109, 119, 19) des beweglichen Abschnitts (6) des Heckarms (5) in der ausgeklappten Arbeitsstellung (20) in Bezug auf den festen Abschnitt (7) des Heckarms (5) umfasst.

3. Vorrichtung nach Anspruch 2, **dadurch gekennzeichnet, dass** die An-/Abkopplungsmittel (8, 108, 118) und die Mittel zum Entriegeln/Verriegeln (9, 109, 119) durch ein gemeinsames Stellglied (10, 70, 80) betätigt werden.

4. Vorrichtung nach Anspruch 3, **dadurch gekennzeichnet, dass** die An-/Abkopplungsmittel (8) ein erstes elastisches Rückstellmittel (28) umfassen, das druckbelastet ist und dessen freie Enden jeweils auf einem Rahmen (35) des festen Abschnitts (7) und auf einer ebenen Fläche (36) einer Schaltklaue (24) abgestützt sind, die in einer Richtung parallel zu einer Längsrichtung (25) der hinteren Kraftübertragungswelle (2) verschiebbar ist, und die Mittel zum Entriegeln/Verriegeln (9) ein zweites elastisches Rückstellmittel (29) umfassen, das druckbelastet ist und dessen freie Enden am Rahmen (35) des festen Abschnitts (7) und an einer ebenen Fläche (38) einer Stange (26) der Mittel zum Entriegeln/Verriegeln (9) abgestützt sind.

5. Vorrichtung nach Anspruch 4, **dadurch gekennzeichnet, dass** das erste elastische Rückstellmittel (28) die Ausübung einer ersten Rückstellkraft auf die Schaltklaue (24) und das zweite elastische Rückstellmittel (29) die Ausübung einer zweiten Rückstellkraft auf die Stange (26) der Mittel zum Entriegeln/Verriegeln (9) ermöglicht, wobei die erste Rückstellkraft kleiner als die zweite Rückstellkraft ist.

6. Vorrichtung nach Anspruch 3, **dadurch gekennzeichnet, dass** die Ein- und Ausklappvorrichtung (1, 71, 81) ein mechanisches Verbindungselement (30, 130, 131) beinhaltet, das den gleichzeitigen Betrieb der An-/Abkopplungsmittel (8, 108, 118) und der Mittel zum Entriegeln/Verriegeln (9, 109, 119) mit dem gemeinsamen Antrieb (10, 70, 80) ermöglicht.

7. Vorrichtung nach den Ansprüchen 4 und 6, **dadurch gekennzeichnet, dass** das mechanische Verbindungselement (30) mindestens eine Gelenkstange (31), mindestens ein Verbindungswinkelgetriebe (32) mit mindestens einem Freiheitsgrad in Bezug auf den Rahmen (35) und einen Drücker (39) umfasst, der es ermöglicht, eine Druckkraft auf die ebene Fläche (36) der Schaltklaue (24) auszuüben, wobei die freien Enden der Gelenkstange (31) jeweils in Kugelgelenkverbindung mit einerseits einem freien Ende der Stange (26) und andererseits einem freien Ende eines Hebelarms (41) des Verbindungswinkelgetriebes (32) angeordnet sind, wobei das mechanische Verbindungselement (30) es dem gemeinsamen Stellglied (10) ermöglicht, die bewegliche Schaltklaue (24) in einer Richtung parallel zur Längsrichtung (25) der hinteren Antriebswelle (2) in Translation zu verschieben.

8. Vorrichtung nach Anspruch 6, **dadurch gekennzeichnet, dass** das mechanische Verbindungselement (130, 131) mindestens einen Vorsprung (79, 89) umfasst, der eingerichtet ist, die Translationsverschiebung einer Schaltklaue (74, 84) zu steuern, wobei der Vorsprung (79, 89) in Gleitverbindung (75) mit einem Rahmen (35) des festen Abschnitts (7) des Heckarms (5) angeordnet ist und ein freies Ende aufweist, das in ringförmiger linearer Verbindung (78) mit einem freien Ende einer Stange (126) angeordnet ist, und die Stange (126) in schraubenförmiger Verbindung (76) mit dem Rahmen (35) angeordnet ist, um die Translationsverschiebung mindestens eines Fingers (77) des Stellglieds (70, 80) in eine kombinierte Dreh- und Translationsbewegung der Stange (126) in Bezug auf den Rahmen (35) umzuwandeln.

9. Vorrichtung nach Anspruch 2, **dadurch gekennzeichnet, dass** die An-/Abkopplungsmittel (18) ein erstes Stellglied (60) und die Mittel zum Entriegeln und Verriegeln (19) ein von dem ersten Stellglied (60) verschiedenes zweites Stellglied (61) beinhalten.

10. Vorrichtung nach einem der Ansprüche 1 bis 9,
**dadurch gekennzeichnet, dass** die Drehmittel (125) eine Drehachse (22) aufweisen, die um einen vorbestimmten Winkel α in Bezug auf eine Ebene P senkrecht zu einer Längsrichtung (25) der hinteren Kraftübertragungswelle (2, 12} geneigt ist, wobei der vorbestimmte Winkel α zwischen 20 Grad und 30 Grad liegt.

11. Drehflügler (4), der mit einem Heckrotor (3) ausgestattet ist, der an einem Heckarm (5) angeordnet ist, wobei der Heckrotor (3) mittels mindestens eines Motors (124) und einer Heckkraftübertragungswelle (2, 72, 82, 12) drehangetrieben ist und der Heckarm (5) einen in Bezug auf einen festen Abschnitt (7) zwischen zwei verschiedenen Endpositionen, nämlich einer ausgeklappten Arbeitsposition (20), die der hinteren Kraftübertragungswelle (2, 72, 82, 12) die Übertragung eines Motordrehmoments auf den Heckrotor (3) erlaubt, und einer eingeklappten Ruheposition (21) zum Reduzieren der Länge des Drehflüglers (4), wenn der Motor (124), die Heckantriebswelle (2), 72, 82, 12) und der hintere Rotor (3) stillstehen, drehbaren Abschnitt (6) aufweist, **dadurch gekennzeichnet, dass** der Drehflügler (4) eine Ein-/Ausklappvorrichtung (1, 71, 81, 11) zum Ein- und Ausklappen eines Heckarms (5) nach einem der Ansprüche 1 bis 10 aufweist.

12. Verfahren zum Ein-/Ausklappen (90) eines Heckarms (5) eines Drehflüglers (4) mit mindestens einem Heckrotor (3), wobei der Heckrotor (3) mittels mindestens eines Motors (124) und mindestens einer hinteren Kraftübertragungswelle (2, 72, 82, 12) drehangetrieben ist, wobei das Verfahren zum Ein-/Ausklappen (90) ausgeführt wird, wenn der mindestens eine Motor (124), die hintere Kraftübertragungswelle (2, 72, 82, 12) und der hintere Rotor (3) jeweils stillstehen, wobei das Verfahren zum Ein-/Ausklappen (90) umfasst:
einen ersten Schritt (91), der darin besteht, zwei Teile (201-271-281-211, 202-272-282-212) derselben hinteren Kraftübertragungswelle (2, 72, 82, 12) mechanisch zu trennen,
einen zweiten Schritt (95) des Entriegelns eines beweglichen Abschnitts (6) des Heckarms (5) in Bezug auf einen festen Abschnitt (7) des Heckarms (5) in einer ausgeklappten Arbeitsposition (20), wobei die ausgeklappte Arbeitsposition (20) des beweglichen Abschnitts (6) es der hinteren Kraftübertragungswelle (2, 72, 82, 12) erlaubt, ein Motordrehmoment auf den hinteren Rotor (3) zu übertragen,
einen dritten Schritt (92) des Einklappens des beweglichen Abschnitts (6) in Bezug auf den festen Abschnitt (7), wobei das Einklappen einer relativen Drehbewegung um einen Winkel (β) des beweglichen Abschnitts (6) zwischen zwei verschiedenen Endpositionen entspricht, nämlich der ausgeklappten Arbeitsposition (20) und einer eingeklappten Ruheposition (21), die es ermöglicht, die Länge des Drehflügels (4) zu reduzieren,
einen vierten Schritt (93) des Ausklappens des beweglichen Abschnitts (6) in Bezug auf den festen Abschnitt (7), wobei das Ausklappen einer relativen Drehbewegung um einen Winkel (-β) des beweglichen Abschnitts (6) zwischen zwei verschiedenen Endpositionen entspricht, nämlich der eingeklappten Ruheposition (21) und der ausgeklappten Arbeitsposition (20),
einen fünften Schritt (94), der darin besteht, die beiden Teile (201-271-281-211, 202-272-282-212) der gleichen hinteren Kraftübertragungswelle (2, 72, 82, 12) mechanisch zu koppeln,
- und einen sechsten Schritt (96) des Verriegelns des beweglichen Abschnitts (6) des Heckarms (5) relativ zu dem festen Abschnitt (7) des Heckarms (5) in der ausgeklappten Arbeitsposition (20),
wobei das Ein- und Ausklappverfahren (90) **dadurch gekennzeichnet ist, dass** :
- der erste Schritt (91) und der dritte Schritt (92) unabhängig voneinander durchgeführt werden, wobei der erste Schritt (91) vor dem dritten Schritt (92) ausgeführt wird, und
- der fünfte Schritt (94) und der vierte Schritt (93) unabhängig voneinander ausgeführt werden, wobei der fünfte Schritt (94) nach dem vierten Schritt (93) ausgeführt wird.

13. Verfahren nach Anspruch 12, **dadurch gekennzeichnet, dass** die beiden Teile (201-271-281-211, 202-272-282-212) derselben hinteren Kraftübertragungswelle (2, 72, 82, 82, 82, 12) über motorisierte An-/Abkopplungsmittel (8, 108, 118, 18) mechanisch entkoppelt/gekoppelt werden, die es ermöglichen, eine Schaltklaue (24, 74, 84, 64) in Bezug auf einen ersten Teil (201-271-281-211) der hinteren Antriebswelle (2, 72, 82, 12) in Längsrichtung der hinteren Antriebswelle (2, 72, 82, 12) axial in Translation zu verschieben, wobei die Schaltklaue (24, 74, 84, 64) eingerichtet ist, an eine Glocke (34) komplementärer Form an/abzukoppeln, die mit einem zweiten Teil (202-272-282-212) der hinteren Antriebswelle (2, 72, 82, 12) verbunden ist.

14. Verfahren nach einem der Ansprüche 12 bis 13, **dadurch gekennzeichnet, dass** der erste Schritt (91) gleichzeitig mit dem zweiten Schritt (95) des Entriegelns des beweglichen Teils (6) in Bezug auf den festen Teil (7) in der ausgeklappten Arbeitsposition (20) und der fünfte Schritt (94) gleichzeitig mit dem sechsten Schritt (96) des Verriegelns des beweglichen Teils (6) in Bezug auf den festen Teil (7) in der ausgeklappten Arbeitsposition (20) durchgeführt wird.

15. Verfahren nach einem der Ansprüche 12 bis 14, **dadurch gekennzeichnet, dass** die beiden Teile (201-271-281, 202-272-282) der gleichen hinteren Kraftübertragungswelle (2, 72, 82) mechanisch entkoppelt/gekoppelt werden und der bewegliche Teil (6) des Heckarms (5) in der ausgefahrenen Arbeitsposition (20) mit einem einzigen Stellglied (10, 70, 80) entriegelt/verriegelt wird.

16. Verfahren nach einem der Ansprüche 12 bis 14, **dadurch gekennzeichnet, dass** die beiden Teile (211, 212) der gleichen hinteren Kraftübertragungswelle (12) mit einem ersten Stellglied (60) mechanisch entkoppelt/gekoppelt werden und dass der bewegliche Teil (6) des Heckarms (5) in der verlängerten Arbeitsposition (20) mit einem zweiten Stellglied (61) entriegelt/verriegelt wird, das von dem ersten Stellglied (60) verschieden ist.

## Claims

1. Folding/unfolding device (1, 71, 81, 11) for a tail boom (5) of a rotorcraft (4), the folding/unfolding device (1, 71, 81, 11) being suitable for arranging on the tail boom (5) in association with a rear power transmission shaft (2, 72, 82, 12) upstream from a rear power transmission gearbox (23) and downstream from a main power transmission gearbox (123) mechanically connected to at least one engine (124) of the rotorcraft (4), the rear power transmission shaft (2, 72, 82, 12) being suitable for transmitting driving torque and for driving a tail rotor (3) of the rotorcraft (4) in rotation, the folding/unfolding device (1, 71, 81, 11) comprising:
- mechanical decoupling/coupling means (8, 108, 118, 18) between two portions (201-271-281-211, 202-272-282-212) of the single rear power transmission shaft (2, 72, 82, 12) and arranged respectively upstream and downstream from the folding/unfolding device (1, 71, 81, 11); and
- pivot means (125) enabling a movable portion (6) of the tail boom (5) to move in pivoting relative to a stationary portion (7) of the tail boom (5), the relative pivoting movement being performed between two distinct extreme positions, namely an unfolded, working position (20) enabling the rear power transmission shaft (2, 72, 82, 12) to transmit driving torque to the tail rotor (3), and a folded, rest position (21) enabling the overall length of the rotorcraft (4) to be reduced while the engine (124), the rear power transmission shaft (2, 72, 82, 12), and the tail rotor (3) are all stopped;
**characterised in that** the decoupling/coupling means (8, 108, 118, 18) are motor-driven and can be actuated independently of the pivot means (125) firstly to mechanically decouple the two portions (201-271-281-211, 202-272-282-212) of the single rear power transmission shaft (2, 72, 82, 12) prior to the relative pivoting movement corresponding to folding the movable portion (6) relative to the stationary portion (7) of the tail boom (5), and secondly to mechanically couple together the two portions (201-271-281-211, 202-272-282-212) of the single rear power transmission shaft (2, 72, 82, 12) after the relative pivoting movement corresponding to unfolding the movable portion (6) relative to the stationary portion (7) of the tail boom (5).

2. Device according to claim 1,
**characterised in that** the folding/unfolding device (1, 71, 81, 11) includes unlocking/locking means (9, 109, 119, 19) for the unfolded, working position (20) of the movable portion (6) of the tail boom (5) relative to the stationary portion (7) of the tail boom (5).

3. Device according to claim 2,
**characterised in that** the decoupling/coupling means (8, 108, 118) and the unlocking/locking means (9, 109, 119) are actuated by a common actuator (10, 70, 80).

4. Device according to claim 3,
**characterised in that** the decoupling/coupling means (8) include first resilient return means (28) stressed in compression and having free ends bearing respectively on a frame (35) of the stationary portion (7) and on a plane face (36) of a jaw clutch (24) that is movable in translation along a direction parallel to a longitudinal direction (25) of the rear power transmission shaft (2), and the unlocking/locking means (9) include second resilient return means (29) stressed in compression and having free ends bearing respectively on the frame (35) of the stationary portion (7) and on a plane face (38) of a rod (26) of the unlocking/locking means (9).

5. Device according to claim 4,
**characterised in that** the first resilient return means (28) enable a first return force to be exerted on the jaw clutch (24), and the second resilient return means (29) enable a second return force to be exerted on the rod (26) of the unlocking/locking means (9), the first return force being less than the second return force.

6. Device according to claim 3,
**characterised in that** the folding/unfolding device (1, 71, 81) includes a mechanical connection member (30, 130, 131) enabling the decoupling/coupling means (8, 108, 118) and the unlocking/locking means (9, 109 119) to be actuated simultaneously with the common actuator (10, 70, 80).

7. Device according to claims 4 and 6,
**characterised in that** the mechanical connection member (30) includes at least one link (31), at least one crank (32) having at least one degree of freedom to move in rotation relative to the frame (35), and a pusher (39) enabling a thrust force to be exerted on the plane face (36) of the jaw clutch (24), the free ends of the link (31) being in ball-joint connection respectively with a free end of the rod (26) and with a free end of a lever arm (41) of the crank (32), the mechanical connection member (30) enabling the common actuator (10) to move the movable jaw clutch (24) in translation along a direction parallel to the longitudinal direction (25) of the rear power transmission shaft (2).

8. Device according to claim 6,
**characterised in that** the mechanical connection member (130, 131) includes at least one projection (79, 89) suitable for controlling the movement in translation of a jaw clutch (74, 84), the projection (79, 89) being arranged in a slideway connection (75) with a frame (35) of the stationary portion (7) of the tail boom (5) and including a free end that is arranged in annular linear connection (78) with a free end of a rod (126), the rod (126) being arranged in a helical connection (76) with the frame (35) to transform the movement in translation of at least one finger (77) of the actuator (70, 80) into a combined movement in rotation and in translation of the rod (126) relative to the frame (35).

9. Device according to claim 2,
**characterised in that** the decoupling/coupling means (18) include a first actuator (60), and the unlocking/locking means (19) include a second actuator (61) distinct from the first actuator (60).

10. Device according to any one of claims 1 to 9,
**characterised in that** the pivot means (125) have a pivot axis (22) inclined at a predetermined angle α relative to a plane P perpendicular to a longitudinal direction (25) of the rear power transmission shaft (2, 12), the predetermined angle α lying in the range 20 degrees to 30 degrees.

11. Rotorcraft (4) having a tail rotor (3) arranged on a tail boom (5), the tail rotor (3) being driven in rotation by means of at least one engine (124) and a rear power transmission shaft (2, 72, 82, 12), and the tail boom (5) including a movable portion (6) movable in pivoting relative to a stationary portion (7) between two distinct extreme positions, namely an unfolded, working position (20) enabling the rear power transmission shaft (2, 72, 82, 12) to transmit driving torque to the tail rotor (3), and a folded, rest position (21) enabling the overall length of the rotorcraft (4) to be reduce when the engine (124), the rear power transmission shaft (2, 72, 82, 12) and the tail rotor (3)are all stopped,
**characterised in that** the rotorcraft (4) includes a folding/unfolding device (1, 71, 81, 11) for a tail boom (5) according any one of claims 1 to 10.

12. Folding/unfolding method (90) for folding/unfolding a tail boom (5) of a rotorcraft (4) including at least one tail rotor (3), the tail rotor (3) being driven in rotation by means of at least one engine (124) and at least one rear power transmission shaft (2, 72, 82, 12), the folding/unfolding method (90) being performed when the at least one engine (124), the rear power transmission shaft (2, 72, 82, 12), and the tail rotor (3) are all stopped, the folding/unfolding method (90) comprising:
- a first step (91) consisting in mechanically decoupling two portions (201-271-281 - 211, 202-272-282-212) of a single rear power transmission shaft (2, 72, 82, 12);
- an unlocking, second step (95) for unlocking a movable portion (6) of the tail boom (5) when in an unfolded, working position (20) relative to a stationary portion (7) of the tail boom (5), the unfolded, working position (20) of the movable portion (6) enabling the rear power transmission shaft (2, 72, 82, 12) to transmit driving torque to the tail rotor (3);
- a folding, third step (92) of folding the movable portion (8) relative to the stationary portion (7), the folding corresponding to moving the movable portion (6) in relative pivoting through an angle (β) between two distinct extreme positions, namely the unfolded, working position (20) and a folded, rest position (21) enabling the overall length of the rotorcraft (4) to be reduced;
- an unfolding, fourth step (93) of unfolding the movable portion (6) relative to the stationary portion (7), the unfolding corresponding to a relative pivoting movement, through an angle (-β) of the movable portion (6) between two distinct extreme positions, namely the folded, rest position and the unfolded, working position;
- a fifth step (94) consisting in mechanically coupling together the two portions (201-272-281-211, 202-272-282-212) of the single rear power transmission shaft (2, 72, 82, 12); and
- a locking, sixth step (96) of locking the movable portion (6) of the tail boom (5) in the unfolded, working position (20) relative to the stationary portion (7) of the tail boom (5);
the folding/unfolding method (90) being **characterised in that**:
- the first step (91) and the third step (92) are performed independently of each other, the first step (91) being performed before the third step (92); and
- the fifth step (94) and the fourth step (93) are performed independently of each other, the fifth step (94) being performed after the fourth step (93).

13. Method according to claim 12,
wherein the two portions (201-271-281-211, 202-272-282-212) of the single rear power transmission shaft (2, 72, 82, 12) are mechanically decoupled/coupled via motor-drive decoupling/coupling means (8, 108, 118 18) enabling a jaw clutch (24, 74, 84, 64) to be moved axially in translation relative to a first portion (201-272-281-211) of the rear power transmission shaft (2, 72, 82, 12) in a longitudinal direction of the rear power transmission shaft (2, 72, 82, 12), the jaw clutch (24, 74, 84, 64) being suitable for decoupling/coupling with a bell (34) of complementary shape secured to a second portion (202-272-282-212) of the rear power transmission shaft (2, 72, 82, 12).

14. Method according to either of claims 12 and 13,
**characterised in that** the first step (91) is performed simultaneously with the unlocking, second step (95) in the unfolded, working position (20) of the movable portion (6) relative to the stationary portion (7), and the fifth step (94) is performed simultaneously with the locking, sixth step (96) in the unfolded, working position (20) of the movable portion (6) relative to the stationary portion (7).

15. Method according to any one of claims 12 to 14,
**characterised in that** the two portions (201-271-281, 202-272-282) of the single rear power transmission shaft (2, 72, 82) are mechanically decoupled/coupled together and the movable portion (6) of the tail boom (5) is unlocked/locked in the unfolded, working position (20) with a single actuator (10, 70, 80).

16. Method according any one of claims 12 to 14,
**characterised in that** the two portions (211, 212) of the single rear power transmission shaft (12) are mechanically decoupled/coupled together with a first actuator (60) and the movable portion (6) of the tail boom (5) is unlocked/locked in the unfolded, working position (20) with a second actuator (61) distinct from the first actuator (60).
